# EUROPÄISCHE PATENTANMELDUNG

(11) **EP 1 887 328 A1**
(43) Veröffentlichungstag der Anmeldung: **13.02.2008**
(21) Anmeldenummer: 07113897.8
(22) Anmeldetag: 07.08.2007
(51) Int. Cl.: G01F 1/66

(54) **Koaxial angeordneter Ultraschall-Durchflussmesser**

(30) Priorität: 08.08.2006 DE 102006037059
(71) Anmelder: Siemens VDO Automotive AG, 93055 Regensburg (DE)
(72) Erfinder: Bierl, Rudolf, 93055, Regensburg (DE); Lesser, Martin, 84032, Landshut (DE); Meyer, Andreas, 93199, Zell (DE); Steuber, Frank, 93077, Bad Abbach (DE)

(57) **Zusammenfassung**

Die vorliegende Erfindung betrifft ein Verfahren zur Luftmassenmessung und einen Luftmassensensor.

Um ein preiswertes sowie zuverlässig arbeitendes Verfahren sowie eine entsprechende Vorrichtung zur Durchflussmessung zu schaffen, wird vorgeschlagen, einen Luftmassensensor mit zwei Ultraschallwandlern 3, 4, die in einem Rohr 2 angeordnet sind, so aufzubauen, dass die Ultraschallwandler 3, 4 koaxial und parallel zur Rohrmittenachse M gegenüberliegend angeordnet und zum paarweise wechselnden Betrieb als Sender und Empfänger ausgebildet sind.

## Beschreibung

Die vorliegende Erfindung betrifft ein Verfahren zur Luftmassenmessung und einen Luftmassensensor.

In bekannter Weise wird in Verbrennungskraftmaschinen ein Luft-Treibstoffgemisch unter Verdichtung zur Verbrennung gebracht. Die Leistungsabgabe der Verbrennungskraftmaschine hängt vom Verhältnis von Treibstoffmasse zu Luftmasse ab. Die Messung einer jeweiligen Luftmasse wird mit einem Luftmassensensor durchgeführt, der im Ansaugtrakt der Verbrennungskraftmaschine sitzt. Aufgrund der hohen wirtschaftlichen Bedeutung des Kraftfahrzeugbereiches wird nachfolgend ohne Beschränkung der Verwendung erfindungsgemäßer und allgemein einsetzbarer Strömungssensoren nur auf die Anwendung zur Bestimmung einer angesaugten oder in sonstiger Weise einer Verbrennungskraftmaschine zugeführten Luftmasse eingegangen.

Zahlreiche moderne Verbrennungskraftmaschinen sind heute mit einem Abgas-Turbolader ausgestattet, welcher eine Vorverdichtung der Luftmasse bewirkt. Wurde bereits zu Beginn der Entwicklung von Verbrennungskraftmaschinen der Versuch einer Vorkompression der einer Verbrennungskraftmaschine zuzuführenden Luft mit dem Ziel einer Erhöhung der Motorleistung durch Erhöhung des Luftmengen- und Kraftstoffdurchsatzes pro Arbeitstakt durchgeführt, so wird heute die Aufladung von Otto-Verbren nungskraftmaschinen nicht mehr primär unter dem Leistungsaspekt gesehen, sondern als Möglichkeit zur Einsparung von Kraftstoff und zur Minderung von Schadstoffen. Dabei wird in bekannter Weise einem jeweiligen Abgasstrom Energie zur Vorverdichtung des Luftmassenstromes durch eine im Abgasstrom laufende Turbine mit daran mechanisch gekoppeltem Frischluft-Verdichter entzogen, so dass beispielsweise ein Dieselmotor nun nicht mehr als Saugmotor, sondern als aufgeladener Motor mit Ladeluftdrücken von bis zu 1,5 bar oder gar 2,5 bar bei deutlicher Leistungssteigerung und reduziertem Schadstoffausstoß arbeitet. Hierzu ist selbstverständlich einer jeweiligen Treibstoffmasse eine Luftmasse in einem vorgegebenen Verhältnis zuzugeben, so dass einem Luftmassensensor eine wesentliche Bedeutung bei der Wirtschaftlichkeit und Schadstoffreduktion einer Verbrennungskraftmaschine zukommt.

Da es bei dem chemischen Vorgang der Verbrennung in jedem Betriebszustand einer Verbrennungskraftmaschine auf die Massenverhältnisse von Kraftstoff und Luft ankommt, ist der Massendurchfluss der Ansaug-/Ladeluft auch fortlaufend möglichst genau zu messen. Der maximal zu messende Luftmassenstrom liegt je nach Motorleistung der Verbrennungskraftmaschine im Bereich von 400 bis ca. 1000 kg/h. Aufgrund des niedrigen Leerlaufbedarfes moderner Verbrennungskraftmaschinen beträgt das Verhältnis eines minimalen zu einem maximalen Luftdurchsatz zwischen 1 : 90 bis etwa 1 : 100.

Ein Luftmassensensor kann als Massenstromsensor nach einem thermischen Prinzip arbeiten, wobei eine Abgabe von Wärmeleistung eines durch den Fluss elektrischen Stroms erhitzten Sensormessdrahtes im Vergleich zu einem thermisch isolierten baugleichen Sensordraht über eine Widerstandbrückenschaltung als Maß für eine jeweilige Durchflussmenge ausgewertet wird.

Ein alternativer Ansatz, der gegenüber der elektrothermischen Messung deutlich an elektrischer Energie einspart, ist allgemein in dem Aufsatz "Durchflussmesstechnik - Eine Übersicht", in der Fachzeitschrift "Technisches Messen tm", 1979, Heft 4, Seiten 145 - 149, beschrieben worden. Dazu ist es bekannt, eine Durchflussmessung auf Basis des sog. Verwehungsprinzips unter Verwendung eines sendenden und eines empfangenden Ultraschallmesskopfs aufzubauen. Die beiden Ultraschallmessköpfe dienen dabei einer als Sender und einer als Empfänger und benötigen vor einer Signalauswertung eine entsprechende Sende-/Empfangs-einrichtung.

Ferner ist aus dem Kraftfahrtechnischen Taschenbuch/Bosch, 23., aktualisierte und erweitere Auflage, Verlag Vieweg, 1999, ISBN 3-528-03876-4, Seite 115, ein Verfahren zur Ultraschall-Durchflussmessung bekannt, nach dem sich eine Laufzeit t eines Schallimpulses durch ein Messmedium, wie zum Beispiel Luft, unter dem Schrägungswinkel α mit derselben Messstrecke 1 einmal gegen eine Luftströmung und einmal in Luftströmungsrichtung messen lässt.

Um die Luftströmung möglichst wenig zu beeinflussen und auch den Bauraum gegenüber anderen bekannten Anordnungen zu minimieren, werden die Ultraschallwandler koaxial und schräg gegenüberliegend angeordnet wie z.B. in der DE 33 31 519 C2 offenbart. Dies führt jedoch bei steigendem Anstellwinkel der Wandler zur Horizontalen zu einer Verringerung des Messeffekts. Daraus ergibt sich ein Kompromiss aus einer vom Winkel der Wandler zur Horizontalen abhängigen Einbaulänge und dem Messeffekt der Anordnung. Die schräg gegenüberliegende Anordnung der Wandler bietet den Vorteil der Mittelung der Verwehung über den gesamten Rohrquerschnitt. Eine resultierende Laufzeitdifferenz des Schallimpulses ist dem Volumendurchfluss direkt proportional.

Rein auf einer Signaldrift aufbauend, die durch die Verwehung des Schalls durch die Fluidströmung auftritt, sind beispielsweise in der DE 103 44 895 A1 ein Verfahren und eine Vorrichtung zur Strömungsgeschwindigkeitsmessung mittels Ultraschall offenbart worden, bei dem Schallimpulse von einem Ultraschallsender zu einem Ultraschallempfänger übertragen werden, die gemeinsam als Wandlerarray ausgebildet und parallel ausgerichtet in einer Rohrwandung angeordnet sind. Die Schallwellen durchlaufen den gesamten Rohrquerschnitt bei Reflexion an der gegenüberliegenden Rohrwandung damit zweimal. Die von einem Senderteil des Wandlerarrays ausgesandte Schallkeule ist zudem so gebündelt, dass sie auf dem Empfängerbereich des Arrays im Wesentlichen in einem Punkt fokussiert wird. In Abhängigkeit von einer jeweiligen typischen mittleren Strömungsgeschwindigkeit ab ca. 0,5 m/s bis etwa 50 m/s treten unterschiedlich weite Verwehungen auf, die durch eine Aufteilung des Empfängerbereichs in einzelne kleine Empfangszellen detektiert werden.

Es ist die Aufgabe der vorliegenden Erfindung, ein preiswertes sowie zuverlässig arbeitendes Verfahren sowie eine entsprechende Vorrichtung zur Durchflussmessung zu schaffen.

Diese Aufgabe wird durch die Merkmale der unabhängigen Ansprüche gelöst. Vorteilhafte Weiterbildungen sind Gegenstand der jeweiligen Unteransprüche.

Erfindungsgemäß sind zwei Ultraschallwandler koaxial und horizontal bzw. parallel zur Rohrachse gegenüberliegend angeordnet, wobei die Ultraschallwandler jeweils paarweise abwechselnd als Sender und Empfänger genutzt werden. So werden zwischen den Schallwandlern zu einem Zeitpunkt Schallwellen in Strömungsrichtung und im nächstfolgenden Zeitpunkt Schallwellen in Gegenrichtung ausgetauscht. Durch die horizontale, koaxiale Wandleranordnung wird der gesamte bzw. maximale Messeffekt der Verwehung ausgenutzt, da die Messsignale der Wandler für beide Senderichtungen des Schalls ausgewertet werden. So werden von sehr geringen bis hin zu den höchsten Strömungsgeschwindigkeiten zuverlässige Messergebnisse erzielt. Insbesondere ist durch diese Anordnung jedes seitliche Auswandern einer Hauptkeule des Empfangssignals aus dem Bereich des Empfängerwandlers unabhängig von einer Strömungsgeschwindigkeit im Wesentlichen ausgeschlossen.

Vorzugsweise befinden sich die Ultraschallwandler in Form kompakter piezoelektrischer Wandler in der Rohrmitte und werden durch stromlinienförmige Streben an der Rohrwand befestigt, so dass die Strömung im Rohr insgesamt nur wenig beeinflusst wird. Die Wandler können damit sehr einfach in der Rohrmitte angebracht werden.

Durch diese Anordnung ist eine Mittelung der Verwehung über den Rohrquerschnitt, wie sie nach dem Stand der Technik vorgenommen wird, prinzipiell nicht mehr möglich. Um den Verlust dieses Effekts, welcher bei den zum Stand der Technik beschriebenen Lösungen auftritt, zu kompensieren, wird ein Teil der Strömung aus den Randbereichen des Rohres über mindestens ein Umlenkblatt bzw. Luftleitblech in die Rohrmitte geleitet. Durch die Umlenkung von Teilen der Strömung aus den Randbereichen des Rohres in die Rohrmitte wird der prinzipielle Verlust einer Mittelung der Geschwindigkeiten über den Rohrquerschnitt teilweise kompensiert. Eine rechnerische Kompensation über Kennwertfelder und/oder Eichung kann alternativ oder ergänzend verwendet werden.

Weitere Merkmale und Vorteile der Erfindung werden nachfolgend unter Beschreibung eines Ausführungsbeispieles mit Bezugnahme auf die Abbildungen der Zeichnung angegeben. In der Zeichnung zeigen in schematisierter Darstellung:
- Figur 1:: einen Längsschnitt durch ein Ansaugrohr mit zwei horizontal sich in der Rohrmittenachse gegenüber liegend angeordneten Ultraschallwandlern und
- Figur 2:: eine Draufsicht auf einen Wandler in einer Anordnung gemäß der Ausführungsform von Figur 1.

Über die verschiedenen Abbildungen hinweg werden nachfolgend einheitlich gleiche Bezugsziffern und Bezeichnungen für gleiche Funktions- bzw. Baugruppen und Verfahrensschritte verwendet.

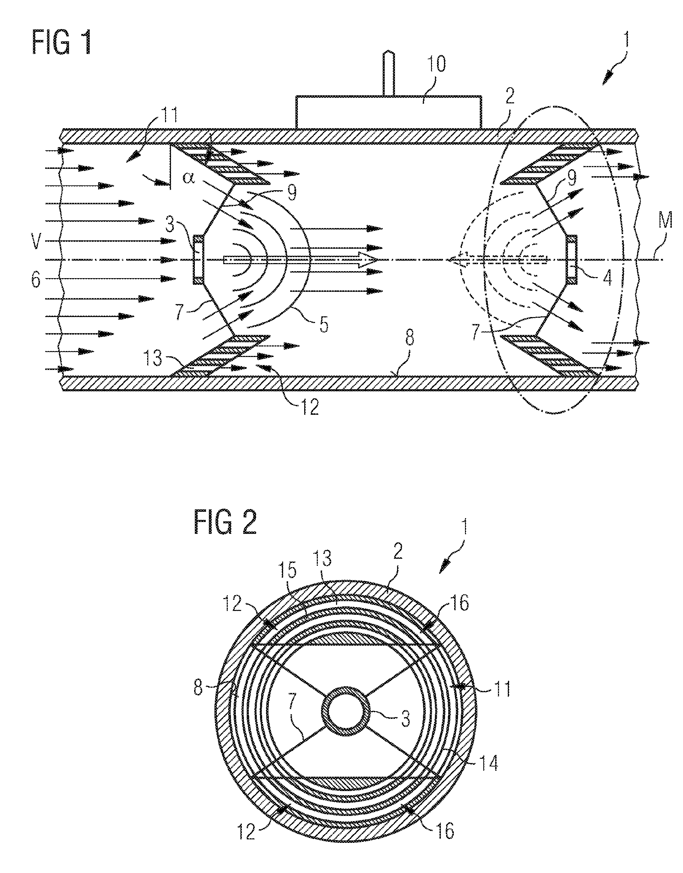

Die Abbildung von Figur 1 zeigt einen vereinfachten Längsschnitt durch eine Vorrichtung 1 mit einem Ansaugrohr 2, in dem zwei Ultraschallwandler 3, 4 vorgesehen sind. Die zwei Ultraschallwandler 3, 4 sind in einer Rohrmittenachse M angeordnet und so ausgerichtet, dass sie sich von ihren Sende- und Empfangseigenschaften her horizontal gegenüberliegen. Das dargestellte Ultraschall-Durchflussmesser-Konzept arbeitet auf Basis des sog. Verwehungsprinzips, wonach Schallwellen 5 in einem strömenden Medium 6 in Abhängigkeit von ihrer Ausbreitungsrichtung relativ zu einer Geschwindigkeit v des Mediums 6 beschleunigt oder verzögert werden. Auch wenn in Figur 1 der Wandler 3 als aktiver Sender dargestellt ist, werden die Messsignale der Wandler 3, 4 für beide Senderichtungen des Schalls aufgenommen und ausgewertet. Aufgrund der Anordnung aller Messkomponenten parallel zur Strömungsrichtung ist jedes seitliche Auswandern einer Hauptkeule eines beschleunigten oder abgebremsten Empfangssignals aus dem Bereich des Empfängerwandlers unabhängig von einer Strömungsgeschwindigkeit ausgeschlossen. Damit wird stets ein starkes Signal empfangen, wodurch auch eine weitgehend störungsarme Signalauswertung garantiert ist.

Die Wandler 3, 4 bauen als piezoelektrische Wandler selber sehr klein und stellen damit im Rohr 2 selber keinen großen Strömungswiderstand dar. Zudem sind die Wandler 3, 4 hier durch vier stromlinienförmige und damit wenig strömungsbeeinflussende Streben 7 an der Rohrinnenwand 8 mechanisch sehr sicher befestigt. Neben der Festlegung der Position der Wandler 3, 4 und deren mechanischen Fixierung sind auch elektrische Leitungen 9 in den Streben 7 enthalten, durch die die Wandler 3, 4 mit elektrischer Energie versorgt bzw. angesteuert und über die ein jeweiliges Ausgangs- bzw. Messsignal von jeweils einem der beiden Wandler 3, 4 zu einer Elektronik 10 übertragen wird. Von der Elektronik 10 wird nach Auswertung dann ein Messergebnis an eine nicht weiter dargestellte Motorsteuerung übermittelt.

Durch die gewählte Anordnung der Wandler 3, 4 in der Mittelachse M wird die Auswirkung dieses Verwehungsprinzips maximiert genutzt, da der sich entlang der Mittelachse M ausbreitenden Schall 5 parallel zur Geschwindigkeit v des Mediums 6 beschleunigt oder abgebremst wird, je nachdem, welcher der Wandler 3, 4 gerade sendet, wobei der jeweils andere Wandler auf Empfang geschaltet ist. Zudem ist die Strömungsgeschwindigkeit v im Bereich der Mittelachse M maximal. Damit können für alle im Betrieb einer Verbrennungskraftmaschine realistischer Weise auftretenden Luftmassenströmungen bzw. Luftmengen aussagekräftige und zuverlässige Messwerte erzielt werden, insbesondere auch bei geringen Strömungsgeschwindigkeiten v des Mediums 6.

Durch die gewählte Anordnung durchläuft nur noch ein unwesentlicher Anteil des jeweils ausgesandten und schließlich auch gemessenen Schalls 5 die Bereiche nahe der Rohrinnenwandung 8, der wesentlich geringere Strömungsgeschwindigkeiten aufweist. Nur im Zuge von Reflexionen gelangen derartige Schallanteile überhaupt von dem in Figur 1 als Sender dargestellten Wandler 3 zu dem als Empfänger wirkenden Wandler 4. Eine zuverlässige Mittelung der Strömungsgeschwindigkeiten v über den Rohrquerschnitt durch unterschiedlich ausgeprägte Verwehungen ist damit prinzipiell nicht mehr möglich. Um den Verlust dieses Effekts zu kompensieren, wird ein Teil der Strömung aus den Randbereichen 11 des Rohres 2 über Umlenkblätter bzw. Luftleitbleche 12 zur Rohrmitte M geleitet. Die Luftleitbleche 12 sind ausschnittsweise trichterförmig ausgebildet und unter einem Winkel α gegenüber der Querschnittsebene des Rohrs 2 geneigt und in zwei Bereichen nahe der Rohrinnenwandung 8 angeordnet. Die Luftleitbleche 12 sind mit Schlitzen 13 versehen, um nur einen Teil dieser Randströmung umzuleiten. Durch die Umlenkung von Teilen der Strömung aus den Randbereichen 11 des Rohres 1 in die Rohrmitte M wird der prinzipielle Verlust einer Mittelung der Geschwindigkeiten v über den Rohrquerschnitt teilweise kompensiert. Eine rechnerische Kompensation über Kennwertfelder und/oder Eichung zur Bildung eines Mittelwerts der Strömungsgeschwindigkeiten v kann alternativ oder ergänzend verwendet werden.

Durch die gestrichelte Linien um den gegenüber dem Wandler 3 stromabwärts gelegenen Ultraschallwandler 4 mit seiner gesamten mechanischen Aufhängung und elektrischen Versorgung wird ein in dem vorliegenden Ausführungsbeispiel gewählter vollsymmetrischer Aufbau hervorgehoben. Durch diese Spiegelsymmetrie soll erreicht werden, dass im Fall von Pulsationen innerhalb des Rohrs 2 beide Strömungsrichtungen in der Messstrecke gleich behandelt werden.

Figur 2 zeigt eine Draufsicht auf die Vorrichtung 1 mit dem Rohr 2 mit dem Wandler 3 in einer Anordnung gemäß der Ausführungsform von Figur 1. In dieser Darstellung wird erkennbar, dass die Luftleitbleche 12 als konzentrische Ringe 14 ausgebildet sind. Nur in zwei Bereichen 16 nahe der Rohrinnenwandung 8 sind Zwischenräume der Ringe 14 in Form von Kreisringabschnitten 15 soweit geschlossen, dass ein Teil der Strömung im Randbereich 11 zur Mittelachse M hin umgelenkt wird, wie in Figur 1 zu Wandler 3 zeichnerisch angedeutet ist. Um den Einfluss der geringeren Randströmungsgeschwindigkeiten in beiden Messrichtungen berücksichtigen zu können, sind derartige Luftleitbleche 12 bei jedem der beiden Wandler 3, 4 vorgesehen, wie in Figur 1 dargestellt.

## Patentansprüche

1. Luftmassensensor mit zwei Ultraschallwandlern (3, 4), die in einem Rohr (2) angeordnet sind,
**dadurch gekennzeichnet, dass** die Ultraschallwandler (3, 4) koaxial und parallel zur Rohrmittenachse (M) gegenüberliegend angeordnet und zum paarweise wechselnden Betrieb als Sender und Empfänger ausgebildet sind.

2. Luftmassensensor nach Anspruch 1,
**dadurch gekennzeichnet, dass** die Ultraschallwandler (3, 4) in der Rohrmitte durch Streben (7) an der Rohrwand (8) befestigt sind, wobei die Streben (7) vorzugsweise stromlinienförmig ausgebildet sind.

3. Luftmassensensor nach dem vorhergehenden Anspruch,
**dadurch gekennzeichnet, dass** beide Wandler (3, 4) über Leitungen (9) in den Streben (7) mit einer Elektronik (10) zur Ansteuerung und Ausgabe eines Signals über eine aktuelle Luftmenge verbunden sind.

4. Luftmassensensor nach einem der vorhergehenden Ansprüche,
**dadurch gekennzeichnet, dass** in einem Bereich (16) mindestens ein Umlenkblatt oder ein Luftleitblech (12) vorgesehen ist, durch das ein Teil der Strömung aus dem Randbereich (11) des Rohres (2) in die Rohrmitte (M) geleitet wird.

5. Luftmassensensor nach dem vorhergehenden Anspruch,
**dadurch gekennzeichnet, dass** das Luftleitblech (12) ausschnittsweise trichterförmig ausgebildet und unter einem Winkel (α) gegenüber der Querschnittsebene des Rohrs (2) geneigt ist.

6. Luftmassensensor nach einem der beiden vorhergehenden Ansprüche, **dadurch gekennzeichnet, dass** das Luftleitblech (12) mit mindestens einem Schlitz (13) versehen ist.

7. Luftmassensensor nach einem der beiden vorhergehenden Ansprüche, **dadurch gekennzeichnet, dass** der stromabwärts gelegenen Ultraschallwandler (4) in seiner gesamten mechanischen Aufhängung zu dem stromaufwärts gelegenen Ultraschallwandler (3) vollsymmetrisch ausgebildet ist, insbesondere spiegelsymmetrisch.

8. Verfahren zur Luftmassenmessung an einer Verbrennungskraftmaschine,
**dadurch gekennzeichnet, dass** Ultraschallwellen (5) parallel zur Rohrmittenachse (M) in abwechselnder Richtung zwischen zwei Wandlern (3, 4) gesendet und empfangen und die Messsignale der Wandler (3, 4) in einer Elektronik (10) ausgewertet werden.

9. Verfahren nach dem vorhergehenden Anspruch,
**dadurch gekennzeichnet, dass** die Messsignale der Wandler (3, 4) für beide Senderichtungen des Schalls ausgewertet werden.

10. Verfahren nach einem der beiden vorhergehenden Ansprüche, **dadurch gekennzeichnet, dass** eine rechnerische Kompensation zur Bildung eines Mittelwerts der Strömungsgeschwindigkeiten (v) über ein Kennwertfeld und/oder eine Eichung verwendet wird.

11. Verfahren nach einem der drei vorhergehenden Ansprüche,
**dadurch gekennzeichnet, dass** als Ultraschallwandler (3, 4) piezoelektrische Wandler verwendet werden.
